# EUROPEAN PATENT APPLICATION

(11) **EP 4 398 370 A1**
(43) Date of publication of application: **10.07.2024**
(21) Application number: 22862493.8
(22) Date of filing: 06.01.2022
(51) Int. Cl.: H01M 10/0583, H01M 10/04

(54) **LAMINATING METHOD AND DEVICE FOR LAMINATED BATTERY**

(30) Priority: 30.08.2021 CN 202111003085
(71) Applicant: SVOLT ENERGY TECHNOLOGY CO., LTD, Changzhou, Jiangsu 213200 (CN)
(72) Inventor: LI, Qiankun, hangzhou, Jiangsu 213200 (CN); LIU, Weiyong, hangzhou, Jiangsu 213200 (CN); HUANG, Liming, hangzhou, Jiangsu 213200 (CN)
(74) Representative: dompatent von Kreisler Selting Werner - Partnerschaft von Patent- und Rechtsanwälten mbB
(86) International application number: PCT/CN2022/070533
(87) International publication number: WO 2023/029342

(57) **Abstract**

A laminating method and device for a laminated battery. The laminating method for a laminated battery comprises the following steps: die-cutting a first negative electrode roll (61) into a plurality of first negative electrode sheets (62), a connecting portion (66) being reserved between any two adjacent first negative electrode sheets (62); unwinding the first negative electrode roll (61) to release the first negative electrode sheets (62); unwinding a first separator roll (63) on two opposite sides of the first negative electrode sheets (62); and moving a composite electrode unit (65) inside on two opposite sides of the first negative electrode sheets (62) in a direction perpendicular to the first negative electrode roll (61), so that first separators (64) and the first negative electrode sheets (62) are stacked on the two opposite sides of the composite electrode unit (65).

## Description

### CROSS-REFERENCE TO RELATED APPLICATION

This application is based on the Chinese patent application "Laminating Method and Equipment for Laminated Battery" with the application number of 202111003085.5 and the application date of August 30, 2021, and requests priority of this Chinese patent application. The entire content of this Chinese patent application is hereby incorporated into this application for reference.

### TECHNICAL FIELD

The present application relates to the field of battery manufacturing technology, and more specifically, to a method and device for stacking laminated batteries.

### BACKGROUND

At present, lithium-ion batteries are divided into wound batteries and laminated batteries according to different manufacturing processes. Relatively speaking, wound batteries have fast processing speed and high efficiency, but in the winding process, there is a serious problem of bending the side of the cell, resulting in low energy density and poor cell performance of the produced wound battery. However, the laminated battery has obvious advantages due to the uniform size and regular shape of the positive and negative electrode sheets, which can effectively improve the utilization rate of the cell volume and increase the energy density. However, the low efficiency of laminating in the production process of laminated batteries restricts the increase in production of laminated batteries.

### SUMMARY

The present application aims to solve at least one of the technical problems existing in the prior art. To this end, the present application proposes a method for laminating laminated batteries, which improves the production efficiency and output of laminated batteries.

The present application also proposes a laminating device for laminated battery, which improves the production efficiency and output of laminated batteries.

A method for laminating a laminated battery according to an embodiment of the present application includes the following steps: die-cutting a first negative electrode roll into a plurality of first negative electrode sheets, and reserving a connection portion between any two adjacent first negative electrode sheets; unwinding the first negative electrode roll to release the first negative electrode sheets; unwinding a first separator roll on opposite sides of the first negative electrode sheet; moving a composite electrode unit inside on opposite sides of the first negative electrode sheet in a direction perpendicular to the direction of releasing the first negative electrode roll, so that the composite electrode unit has first separators and the first negative electrode sheets stacked on opposite sides.

According to the lamination method of the laminated battery in this application, by reserving a connection part between any two adjacent first negative electrode sheets, the continuous connection between the first separator and the first negative electrode sheet is achieved, reducing the steps of laminating the first negative electrode sheets, improving the lamination efficiency, and increasing the output of the laminated battery.

Optionally, after the first separator roll is unwound on the opposite sides of the first negative electrode sheet, the lamination method of the laminated battery further includes: rolling the first separator on the opposite sides of the first negative electrode sheet.

Optionally, before the rolling process of the first separator on the opposite sides of the first negative electrode sheet, the lamination method of the laminated battery further includes: performing a heat-treatment on the first separator on the opposite sides of the first negative electrode sheet.

Alternatively, the rolling process performed on the first separator on the opposite sides of the first negative electrode sheet may be a hot pressing process.

Optionally, before rolling the first separator on the opposite sides of the first negative electrode sheet, the lamination method of the laminated battery further comprises Corona-shock-treatment of the first separator on the opposite sides of the first negative electrode sheet.

Alternatively, the composite electrode unit includes a second negative electrode sheet, two second separators, two positive electrode sheets, and two second separators disposed on opposite sides of the second negative electrode roll, with two positive electrode sheets correspondingly disposed on the two second separators.

Alternatively, the step of moving the composite electrode unit inside on the opposite sides of the first negative electrode sheet in the direction perpendicular to the direction of releasing the first negative electrode roll includes releasing a second negative electrode roll in the direction perpendicular to the direction of releasing the first negative electrode roll, and die-cutting out the second negative electrode sheet during the release process of the second negative electrode roll; unwinding a second separator roll on the opposite sides of the second negative electrode sheet; unwinding a positive electrode roll on the second separator on both sides, die-cutting out the positive electrode sheet during the unwinding process of the positive electrode roll, cutting and stacking the second negative electrode sheet, the second separator, and the positive electrode sheet to obtain the composite electrode unit, and moving the composite electrode unit into between two adjacent first negative electrode sheets.

Optionally, after moving the composite electrode unit inside on the opposite sides of the first negative electrode sheet in the direction perpendicular to the direction of releasing the first negative electrode roll so that the first separator and the first negative electrode sheet are stacked on both sides of the composite electrode unit, further comprising: performing heat-treatment on the bottom of the laminated battery.

A laminating device for laminated battery according to an embodiment of the present application includes a first unwinding device; the first unwinding device is provided with a first negative electrode roll, which is die-cut into a plurality of first negative electrode sheets, and a connection portion is reserved between any two adjacent first negative electrode sheets; the first unwinding device can be used to unwind the first negative electrode roll to release the first negative electrode sheets; a second unwinding device, which is provided with a first separator roll, and the second unwinding devices being two, to unwind the first separator roll on opposite sides of the first negative electrode sheet; a feeding device, which is provided with a composite electrode unit, and the feeding devices being two, to move the composite electrode unit inside on opposite sides of the first negative electrode sheet in the direction perpendicular to the direction of releasing the first negative electrode roll, so that both opposite sides of the composite electrode unit are stacked with the first separator and the first negative electrode sheet.

The laminating device for laminated battery according to the embodiments of the present application achieves continuous connection between the first separator and the first negative electrode sheet by reserving a connection portion between any two adjacent first negative electrode sheets, reducing the steps of stacking the first negative electrode sheets, improving the lamination efficiency, and increasing the output of laminated batteries.

Optionally, the laminating device further comprises a first rolling device for rolling the first separator on the opposite sides of the first negative electrode sheet.

Alternatively, the first rolling device is configured as a hot pressing device.

Optionally, the laminating device further comprises a first heating device for thermally treating the first separator on the opposite sides of the first negative electrode sheet.

Optionally, the lamination device further comprises a first corona device for corona shock processing of the first separator on the opposite sides of the first negative electrode sheet.

Optionally, the feeding device comprises a third unwinding device equipped with a second negative electrode roll for unwinding the second negative electrode roll in a direction perpendicular to the direction of releasing the first negative electrode roll, during which the second negative electrode roll is die-cut into second negative electrode sheets; and a fourth unwinding device equipped with a second separator roll for unwinding the second separator roll on opposite sides of the second negative electrode sheet; a fifth unwinding device, which is provided with a positive electrode roll for unwinding the positive electrode roll on the second separators on both sides, and the positive electrode roll is die-cut during unwinding to obtain the positive electrode sheet; a cutting device, which is used to cut the stacked second negative electrode sheet, second separator, and positive electrode sheet to obtain the composite electrode unit, and move the composite electrode unit into between two adjacent first negative electrode sheets.

Optionally, the laminating device for laminated battery further comprises a heating platform disposed below the first unwinding device for heating the bottom of the laminated batteries.

Additional aspects and advantages of the present application will be set forth in part in the description which follows, and in part will be obvious from the description, or may be learned through practice of the present application.

### BRIEF DESCRIPTION OF THE DRAWINGS

The above and/or additional aspects and advantages of the present application will become apparent and easily understood from the description of the embodiments in conjunction with the following drawings, in which:
Figure 1 is a flow diagram of the lamination method for laminated batteries in the embodiments of this application;
Figure 2 is a flow diagram of the lamination method for laminated batteries in another embodiment of the present application;
Figure 3 is a structural diagram of the laminating device for laminated battery in the embodiment of the present application;
Figure 4 is a structural diagram of the first negative electrode sheet in the embodiment of the present application;
Figure 5 is a structural diagram of the connecting part in the embodiment of the present application;
Figure 6 is a structural diagram of the cathode sheet in the embodiment of the present application;
Figure 7 is a structural diagram of the composite electrode unit in the embodiment of the present application.

The following is the list of the reference numbers:
100. Laminating equipment for laminated batteries;
10. First unwinding device; 20. Second unwinding device; 30. First corona device; 31. Second corona device; 40. First heating device; 41. Second heating device; 50. First rolling device; 51. Second rolling device;
61. First negative electrode roll; 62. First negative electrode sheet; 63. First separator roll; 64. First separator; 65. Composite electrode unit; 651. Second negative electrode sheet; 652. Second separator; 653. Positive electrode sheet; 66. Connection portion; 67. Second negative electrode roll; 68. Second separator roll; 69. Positive electrode roll;
70. Heating platform; 80. Feeding device; 81. Third unwinding device; 82. Fourth unwinding device; 83. Fifth unwinding device; 84. Cutting device.

### DETAILED DESCRIPTION

The embodiments of the present application are described in detail below. Examples of the embodiments are shown in the accompanying drawings, where the same or similar reference numerals throughout indicate the same or similar elements or elements having the same or similar functions. The embodiments described below with reference to the accompanying drawings are exemplary and are only used to explain the present application, and should not be construed as limiting the present application.

In the description of this application, it is necessary to understand that the terms "length", "width", "thickness", "up", "down", "front", "rear", "left", "right" and other directional or positional relationships indicated are based on the directional or positional relationships shown in the drawings, and are only for the convenience of describing this application and simplifying the description, rather than indicating or implying that the devices or elements referred to must have a specific orientation, be constructed and operated in a specific orientation, and therefore cannot be understood as limitations on this application.

In addition, features defined as "first" and "second" may explicitly or implicitly include one or more of these features, used to distinguish and describe features without order or importance.

In the description of the present application, unless otherwise specified, the meaning of "a plurality of" is two or more.

In the description of this application, it should be noted that unless otherwise explicitly specified and defined, the terms "installing", "linking", and "connecting" should be broadly understood, for example, they can be fixed connections, detachable connections, or integrated connections; they can be mechanical connections or electrical connections; they can be directly connected or indirectly connected through intermediate media, and they can be internal connections between two components. For those of ordinary skill in the art, the specific meanings of the above terms in this application can be understood based on specific circumstances.

The lamination method of the laminated battery in the embodiment of the present application is described below in conjunction with the accompanying drawings.

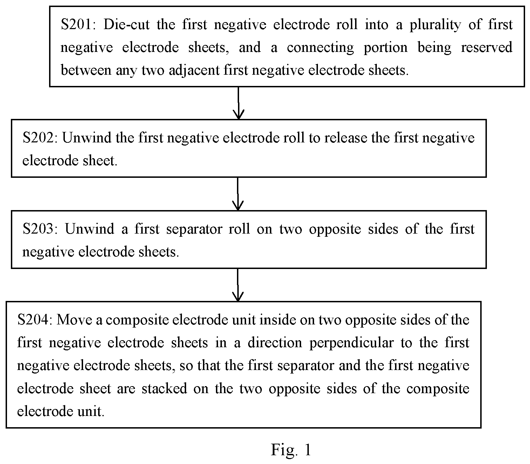

As shown in Figure 1, the method for laminating a laminated battery according to an embodiment of the present application includes the following steps:

S201: Die-cutting the first negative electrode roll 61 into a plurality of first negative electrode sheets 62, and reserving a connecting portion 66 between any two adjacent first negative electrode sheets 62. The connecting portion 66 is reserved between adjacent first negative electrode sheets 62, and the adjacent first negative electrode sheets 62 are kept connected by the reserved connecting portion 66. That is to say, after die-cutting the first negative electrode roll 61, the plurality of first negative electrode sheets 62 can still be rolled together. Compared to the state in which there is no connecting portion 66 between negative electrode sheets in the prior art, the connecting portion 66 keeps the plurality of first negative electrode sheets 62 continuous.

Alternatively, the mode of die-cutting the first negative electrode roll 61 into a plurality of first negative electrode sheets 62 is continuous die-cutting.

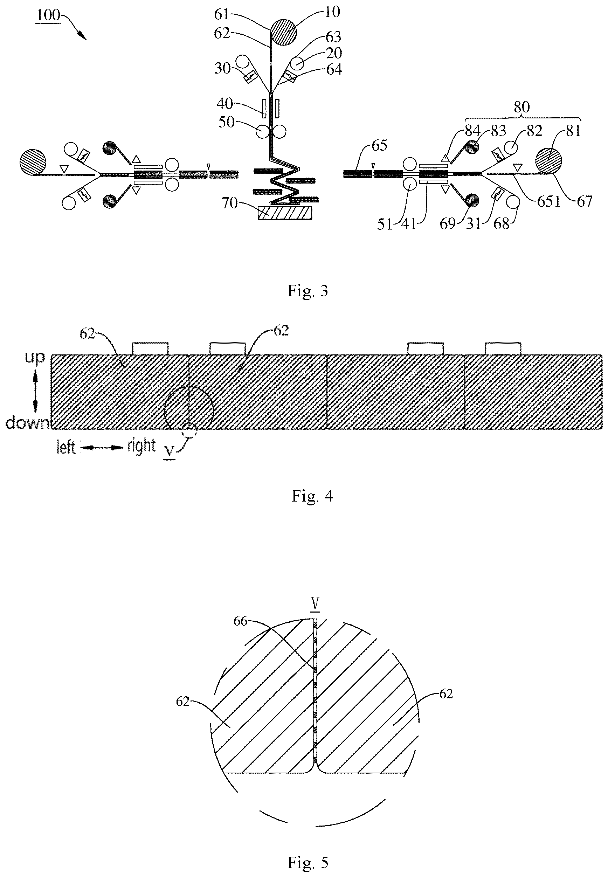

As shown in Figure 5, optionally, there are multiple connection portions 66 reserved between any two adjacent first negative electrode sheets 62, which makes the connection between the adjacent two first negative electrode sheets 62 more stable by providing multiple connection portions 66.

Alternatively, the width of the connecting portion 66 ranges from 1 to 2 millimeters. By setting the width of the connecting portion 66 to be in the range of 1 to 2 millimeters, the stability of the connection between two adjacent connecting portions 66 is ensured. For example, the dimension of the connecting portion 66 in the up-down direction is the width dimension, and the width of the connecting portion 66 is 1 millimeter. Alternatively, the width of the connecting portion 66 is 2 millimeters. Alternatively, the width of the connecting portion 66 is 1.5 millimeters.

S202: unwinding the first negative electrode roll 61 to release the first negative electrode sheet 62. The first negative electrode roll 61 is a plurality of first negative electrode sheets 62 connected together, which are rolled up into a roll. After unwinding the first negative electrode roll 61, the first negative electrode sheet 62 is released from the rolled-up state. It should be noted that the material of the first negative electrode sheet 62 is soft, and the first negative electrode sheet 62 can deform. After deformation, the first negative electrode sheet 62 is rolled up into a roll.

S203: Unwind the first separator roll 63 on the opposite sides of the first negative electrode sheet 62.

For example, the first separator roll 63 is unwound on the opposite front and back sides of the first negative electrode sheet 62. The unwound first separator roll 63 is in the form of a film, which can be fitted to the first negative electrode sheet 62.

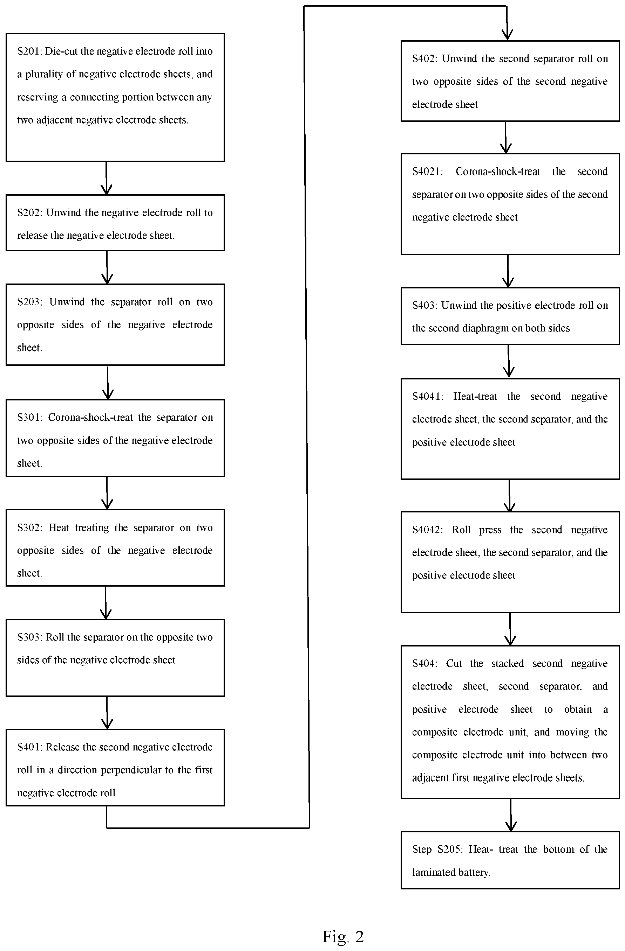

As shown in Figure 2, in some embodiments, step S301 is included after step S203, and step S301 is: performing corona-shock-treatment on the first separator 64 on the opposite sides of the first negative electrode sheet 62. By performing corona-shock-treatment on the first separator 64, low-temperature plasma is generated on the surface of the first separator 64, improving the adhesion of the surface of the first separator 64.

Alternatively, before the first separator 64 is attached to the surface of the first negative electrode sheet 62, the first separator 64 is subjected to a corona-shock-treatment. By subjecting the first separator 64 to a corona-shock-treatment before fitting it to the first negative electrode sheet 62, the adhesion of the first separator 64 itself is improved when it is fitted to the first negative electrode sheet 62, and the first separator 64 is more tightly fitted to the first negative electrode sheet 62.

Alternatively, the first separator 64 on the opposite sides of the first negative electrode sheet 62 is subjected to corona-shock-treatment by the first corona device 30, and the voltage of the first corona device 30 is 2000 to 4000 volts. The voltage of the first corona device 30 is within the range of 2000 to 4000 volts, which improves the surface adhesion of the first separator 64 after corona-shock-treatment.

Optionally, step S302 is included after step S301, and step S302 is: heat-treating the first separator 64 on the opposite sides of the first negative electrode sheet 62, and further treating the surface of the first separator 64 after corona-shock-treatment by heat-treating the first separator 64 on the opposite sides of the first negative electrode sheet 62 to improve the adhesion of the surface of the first separator 64.

Alternatively, the temperature value formed by the heat-treatment on the first separator 64 is 60 to 110 degrees Celsius. For example, the temperature value formed by the heat-treatment on the first separator 64 is 60 degrees Celsius; alternatively, the temperature value formed by the heat-treatment on the first separator 64 is 110 degrees Celsius; or alternatively, the temperature value formed by the heat-treatment on the first separator 64 is 90 degrees. It should be noted that the temperature value formed by the heat-treatment on the first separator 64 is determined based on factors such as the flow velocity of the first negative electrode sheet 62 and the viscosity of the first separator 64 before heat-treatment. In order to achieve the required viscosity between the first separator 64 and the first negative electrode sheet 62, the temperature value formed by the heat-treatment can be adjusted.

Optionally, step S303 is included after step S302, and step 303 is: roll the first separator 64 on the opposite sides of the first negative electrode sheet 62. After steps S301 and S302, step S303 rolls the first separator 64 on the opposite sides of the first negative electrode sheet 62 to make the first separator 64 more closely fit to the first negative electrode sheet 62, and the rolled first separator 64 is completely adhered to the first negative electrode sheet 62.

Alternatively, the pressure value output by the rolling process on the first separator 64 is 1000 to 5000 Newton. For example, the pressure value output by the rolling process on the first separator 64 is 1000 Newton; alternatively, the pressure value output by the rolling process on the first separator 64 is 5000 Newton; or alternatively, the pressure value output by the rolling process on the first separator 64 is 3000 Newton. It should be noted that the pressure value output by the rolling process on the first separator 64 is determined based on factors such as the flow velocity of the first negative electrode sheet 62 and the viscosity on the first separator 64. In order to achieve the required viscosity between the first separator 64 and the first negative electrode sheet 62, the pressure value formed by the rolling process can be adjusted.

Alternatively, the rolling process performed on the first separator 64 on the opposite sides of the first negative electrode sheet 62 is a hot pressing process. The first separator 64 is subjected to a heat-treatment in step S302 before step S303, but the first separator 64 may be in a normal temperature state before the rolling process, resulting in changes in the surface adhesion of the first separator 64. By setting the rolling process as a hot pressing process, the environment surrounding the first separator 64 is controlled while rolling the first separator 64, allowing the first separator 64 to be rolled together with the first negative electrode sheet 62 with sufficient adhesion, improving the connection stability between the first separator 64 and the first negative electrode sheet 62.

Alternatively, the temperature value formed by the hot pressing process on the first separator 64 is 60 to 110 degrees Celsius. For example, the temperature value formed by the hot pressing process on the first separator 64 is 60 degrees Celsius; alternatively, the temperature value formed by the hot pressing process on the first separator 64 is 110 degrees Celsius; or alternatively, the temperature value formed by the hot pressing process on the first separator 64 is 90 degrees. It should be noted that in order to achieve the required viscosity between the first separator 64 and the first negative electrode sheet 62, the temperature value formed by the hot pressing process can be adjusted.

S204: moving the composite electrode unit 65 inside on the opposite sides of the first negative electrode sheet 62 in the direction perpendicular to the first negative electrode sheet 62, so that the first separator 64 and the first negative electrode sheet 62 are stacked on both sides of the composite electrode unit 65. It should be noted that a connecting portion 66 is reserved between adjacent two first negative electrode sheets 62, which keeps the plurality of first negative electrode sheets 62 connected. When moving the composite electrode unit 65 into the opposite sides of the first negative electrode sheet 62, the plurality of first negative electrode sheets 62 maintain a continuous output and folding state, while the first separator 64 is adhered to the opposite sides of the first negative electrode sheet 62. In other words, only moving the composite electrode unit 65 into the opposite sides of the first negative electrode sheet 62 can complete the stacking of the composite electrode unit 65, the first negative electrode sheet 62, and the first separator 64. Compared with the existing technology in which positive and negative electrode sheets and separators are simultaneously moved back and forth, it improves production efficiency.

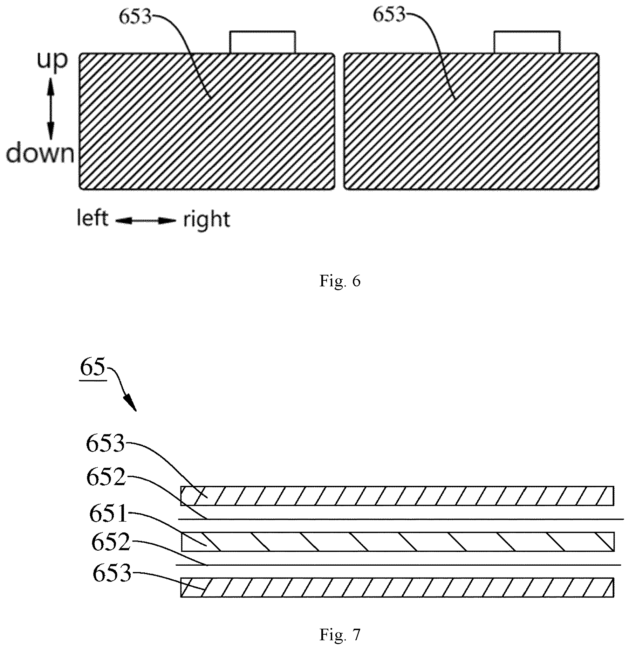

As shown in Figure 7, the composite electrode unit 65 can optionally include a second negative electrode sheet 651, two second separators 652, and two positive electrode sheets 653. The two second separators 652 are arranged on opposite sides of the second negative electrode roll 67, and the two positive electrode sheets 653 are correspondingly arranged on the two second separators 652. By arranging the composite electrode unit 65 to move into both sides of the first negative electrode sheet 62, compared to the prior art where a single positive electrode sheet 653 is moved into both sides of the first negative electrode sheet 62, the production efficiency is improved and the stacking speed is increased.

Optionally, step S204 includes the following steps:

S401: releasing the second negative electrode roll 67 in a direction perpendicular to a direction of releasing the first negative electrode roll 61, die-cutting out the second negative electrode sheet 651 during the release of the second negative electrode roll 67, and facilitating the die-cutting of the second negative electrode roll 67 by die-cutting out the second negative electrode sheet 651 during the release of the second negative electrode roll 67, thereby reducing the requirements for the die-cutting device.

S402: Unwind the second separator roll 68 on the opposite sides of the second negative electrode sheet 651. For example, the second separator roll 68 is unrolled on the upper and lower sides of the second negative electrode sheet 651, and the unrolled separator is fitted to the upper and lower sides of the second negative electrode sheet 651.

Optionally, step S402 is followed by step S4021: corona-shock-treatment is applied to the second separator 652 on the opposite sides of the second negative electrode sheet 651. By applying corona-shock-treatment to the second separator 652 on the opposite sides of the second negative electrode sheet 651, the surface viscosity of the second separator 652 is increased, making the second separator 652 more firmly fitted to the second negative electrode sheet 651.

Alternatively, before the second separator 652 is fitted to the surface of the second negative electrode sheet 651, the second separator 652 is subjected to corona-shock-treatment. By subjecting the second separator 652 to corona-shock-treatment before fitting it to the second negative electrode sheet 651, the adhesion of the second separator 652 itself is improved when it is fitted to the second negative electrode sheet 651, and the second separator 652 is more tightly fitted to the second negative electrode sheet 651.

Alternatively, the second separator 652 on the opposite sides of the second negative electrode sheet 651 is subjected to corona-shock-treatment by the second corona device 31, which has a voltage of 2000 to 4000 volts. The voltage of the second corona device 31 is within the range of 2000 to 4000 volts, which improves the surface adhesion of the second separator 652 after corona-shock-treatment.

S403: Unwind the positive electrode roll 69 on the second diaphragm 652 on both sides, and a positive electrode sheet 653 is die-cut out during the unwinding process of the positive electrode roll 69. The positive electrode roll 69 is placed on the side of the second separator 652 away from the second negative electrode sheet 651, and the positive electrode sheet 653 die-cut out from the positive electrode roll 69 is attached to the side of the second separator 652 away from the second negative electrode sheet 651. The positive electrode sheet 653, the second separator 652, and the second negative electrode sheet 651 form a structure of positive electrode sheet 653-second separator 652-second negative electrode sheet 651-second separator 652-positive electrode sheet 653, which improves stacking efficiency.

S404: cutting the stacked second negative electrode sheet 651, second separator 652, and positive electrode sheet 653 to obtain a composite electrode unit 65, and moving the composite electrode unit 65 into between two adjacent first negative electrode sheets 62. The composite electrode unit 65 is moved into between the two first negative electrode sheets 62 to form a repeating structure of first negative electrode sheet 62-first separator 64-positive electrode sheet 653-second separator 652-second negative electrode sheet 651-second separator 652-positive electrode sheet 653-first separator 64-first negative electrode sheet 62. By providing the composite electrode unit 65, production time is reduced and production efficiency is improved.

Optionally, step S4041 is included before step S404, and step S4041 is: performing heat-treatment on the second negative electrode sheet 651, the second separator 652, and the positive electrode sheet 653. By performing heat-treatment on the second negative electrode sheet 651, the second separator 652, and the positive electrode sheet 653, further perform a treatment on the surface of the second separator 652 after performing corona-shock-treatment on the surface of the second separator 652, the surface adhesion of the second separator 652 is improved.

Alternatively, the temperature value of the heat-treatment on the second negative electrode sheet 651, the second separator 652, and the positive electrode sheet 653 is 60 to 110 degrees Celsius. For example, the temperature value of the heat-treatment on the second negative electrode sheet 651, the second separator 652, and the positive electrode sheet 653 is 60 degrees Celsius; alternatively, the temperature value of the heat-treatment on the second negative electrode sheet 651, the second separator 652, and the positive electrode sheet 653 is 110 degrees Celsius; or alternatively, the temperature value of the heat-treatment on the second negative electrode sheet 651, the second separator 652, and the positive electrode sheet 653 is 90 degrees. It should be noted that the temperature values of the heat-treatment on the second negative electrode sheet 651, the second separator 652, and the positive electrode sheet 653 are determined based on factors such as the flow velocity of the second negative electrode sheet 651 and the second separator 652, and the viscosity of the second separator 652 before heat-treatment. In order to achieve the required viscosity between the second negative electrode sheet 651, the second separator 652, and the positive electrode sheet 653, the temperature values formed by heat-treatment can be adjusted.

Optionally, step S4042 is included after step S4041, and step S4042 is to roll the second negative electrode sheet 651, the second separator 652, and the positive electrode sheet 653. After step S4041, step S4042 rolls the second negative electrode sheet 651, the second separator 652, and the positive electrode sheet 653 to make them fitted more tightly, and the rolled second negative electrode sheet 651, the second separator 652, and the positive electrode sheet 653 are completely bonded together.

Alternatively, the pressure value output by the rolling process on the second negative electrode sheet 651, the second separator 652, and the positive electrode sheet 653 is 1000 to 5000 Newton. For example, the pressure value output by the rolling process on the second negative electrode sheet 651, the second separator 652, and the positive electrode sheet 653 is 1000 Newton; alternatively, the pressure value output by the rolling process on the second negative electrode sheet 651, the second separator 652, and the positive electrode sheet 653 is 5000 Newton; or alternatively, the pressure value output by the rolling process on the second negative electrode sheet 651, the second separator 652, and the positive electrode sheet 653 is 3000 Newton. It should be noted that the pressure value output by the rolling process on the second negative electrode sheet 651, the second separator 652, and the positive electrode sheet 653 is determined based on factors such as the flow velocity of the second negative electrode sheet 651 and the viscosity on the second separator 652. In order to achieve the required viscosity between the second negative electrode sheet 651, the second separator 652, and the positive electrode sheet 653, the pressure value formed by the rolling process can be adjusted.

Alternatively, the rolling process for the second negative electrode sheet 651, the second separator 652, and the positive electrode sheet 653 is a hot pressing process. Prior to step S4042, in step S4041, the second negative electrode sheet 651, the second separator 652, and the positive electrode sheet 653 are subjected to a heat-treatment, but the second negative electrode sheet 651, the second separator 652, and the positive electrode sheet 653 may be in a state of room temperature before undergoing the rolling process, resulting in changes in the surface adhesion of the second separator 652. By setting the rolling process as a hot pressing process, the environment surrounding the second negative electrode sheet 651, the second separator 652, and the positive electrode sheet 653 is controlled while rolling the second negative electrode sheet 651, the second separator 652, and the positive electrode sheet 653, allowing the second separator 652 to be rolled together with the second negative electrode sheet 651 and the positive electrode sheet 653 with sufficient adhesion, thereby improving the connection stability between the second negative electrode sheet 651, the second separator 652, and the positive electrode sheet 653.

Alternatively, the temperature value of the hot pressing process on the second negative electrode sheet 651, the second separator 652, and the positive electrode sheet 653 is 60 to 110 degrees Celsius. For example, the temperature value of the hot pressing process on the second negative electrode sheet 651, the second separator 652, and the positive electrode sheet 653 is 60 degrees Celsius; alternatively, the temperature value of the hot pressing process on the second negative electrode sheet 651, the second separator 652, and the positive electrode sheet 653 is 110 degrees Celsius; or alternatively, the temperature value of the hot pressing process on the second negative electrode sheet 651, the second separator 652, and the positive electrode sheet 653 is 90 degrees. It should be noted that in order to achieve the required viscosity between the second negative electrode sheet 651, the second separator 652, and the positive electrode sheet 653, and the temperature value formed by the hot pressing process can be adjusted.

Optionally, step S205 is included after step S204: heat-treatment of the bottom of the laminated battery. Heat-treatment of the laminated battery keeps it in a heated state, ensuring the internal viscosity of the laminated battery, facilitating subsequent processing of the laminated battery, and improving efficiency.

Alternatively, the temperature value formed by the heat-treatment at the bottom of the laminated battery is 50 to 70 degrees. For example, the temperature value formed by the heat-treatment at the bottom of the laminated battery is 50 degrees Celsius; alternatively, the temperature value formed by the heat-treatment at the bottom of the laminated battery is 70 degrees Celsius; or, the temperature value formed by the heat-treatment at the bottom of the laminated battery is 60 degrees. It should be noted that in order to achieve the required viscosity inside the laminated battery, the temperature value formed by the heat-treatment can be adjusted.

A specific embodiment of the lamination method for the laminated battery of the present application is described below in conjunction with FIGS. 1 and 2.

A method for laminating a laminated battery includes the following steps:
S201: Die-cutting the first negative electrode roll 61 into a plurality of first negative electrode sheets 62, and reserving a connection portion 66 between any two adjacent first negative electrode sheets 62.
S202: Unwind the first negative electrode roll 61 to release the first negative electrode sheet 62.
S203: Unwind the first separator roll 63 on the opposite two sides of the first negative electrode sheet 62.
S301: performing corona-shock-treatment on the first separator 64 on the opposite two sides of the first negative electrode sheet 62. The first separator 64 on the two opposite sides of the first negative electrode sheet 62 is subjected to corona-shock-treatment by a first corona device 30 with a voltage of 4000 volts.
S302: heat-treating the first separator 64 on the opposite two sides of the first negative electrode sheet 62. The temperature value formed on the first separator 64 by the heat-treatment is 110 degrees Celsius.
S303: performing a rolling process on the first separator 64 on the opposite two sides of the first negative electrode sheet 62. The rolling process performed on the first separator 64 on the opposite two sides of the first negative electrode sheet 62 is a hot pressing process, which forms a temperature value of 110 degrees Celsius on the first separator 64 and a pressure value of 5000 Newton on the first separator 64.
S401: releasing the second negative electrode roll 67 in a direction perpendicular to a direction of releasing the first negative electrode roll 61 and die-cutting out the second negative electrode sheet 651 during the release process of the second negative electrode roll 67.
S402: Unwind the second separator roll 68 on the opposite two sides of the second negative electrode sheet 651.
S4021: performing corona-shock-treatment on the second separator 652 on the opposite two sides of the second negative electrode sheet 651. The second separator 652 on the opposite two sides of the second negative electrode sheet 651 is subjected to corona-shock-treatment by a second corona device 31 with a voltage of 4000 volts.
S403: Unwind the positive electrode roll 69 on the second diaphragm 652 on both sides, and die-cut out the positive electrode sheet 653 during the unwinding process of the positive electrode roll 69.
S4041: heat-treating the second negative electrode sheet 651, the second separator 652, and the positive electrode sheet 653. The temperature value formed on the first separator 64 by the heat-treatment is 110 degrees Celsius.
S4042: performing a rolling process on the second negative electrode sheet 651, the second separator 652, and the positive electrode sheet 653. The rolling process performed on the second negative electrode sheet 651, the second separator 652, and the positive electrode sheet 653 is a hot pressing process, which forms a temperature value of 110 degrees Celsius on the second negative electrode sheet 651, the second separator 652, and the positive electrode sheet 653, and forms a pressure value of 5000 Newton on the second negative electrode sheet 651, the second separator 652, and the positive electrode sheet 653.
S404: cutting the stacked second negative electrode sheet 651, second separator 652, and positive electrode sheet 653 to obtain a composite electrode unit 65, and moving the composite electrode unit 65 between two adjacent first negative electrode sheets 62.
Step S205: performing heat-treatment on the bottom of the laminated battery.

Compared to the Z-type lamination process and thermal composite lamination process in the prior art, the Z-type lamination process has slow lamination speed, low efficiency, extended production cycle, and increased production costs. The thermal composite lamination process has slow stacking efficiency and high production costs.

The present application achieves continuous connection between the first separator 64 and the first negative electrode sheet 62 by reserving a connection portion 66 between any two adjacent first negative electrode sheets 62, reducing the steps of stacking the first negative electrode sheets 62, improving the lamination efficiency, and increasing the production of laminated batteries. Compared to the prior art Z-type lamination process, which involves thermal bonding of positive and negative electrode sheets and a separator after stacking, in the present application, the first negative electrode sheet 62 is separately bonded with the first separator 64 by hot pressing before lamination, avoiding the thickening of the composite electrode unit 65, the first negative electrode sheet 62, and the first separator 64 after stacking which results in an inability to heat and bond the intermediate layers, thereby improving the bonding effect. At the same time, compared to the prior art where the positive electrode sheet, negative electrode sheet, and separator are stacked and then separately cored with a separator, in the present application, the first negative electrode sheet 62 and first separator 64 are first thermos-composite. The composite electrode unit 65, first negative electrode sheet 62, and first separator 64 do not need to be separately cored with the first separator 64 after stacking, which improves the utilization rate of the first separator 64 and reduces costs. Moreover, the present application further improves production efficiency by providing the composite electrode unit 65.

As shown in Figure 3 to Figure 7, a laminating device 100 for laminating batteries according to an embodiment of the present application includes a first unwinding device 10, a second unwinding device 20, and a feeding device 80.

The first unwinding device 10 is provided with a first negative electrode roll 61, which is die-cut into a plurality of first negative electrode sheets 62, and a connecting portion 66 is reserved between any two adjacent first negative electrode sheets 62. The first unwinding device 10 can be used to unwind the first negative electrode roll 61 to release the first negative electrode sheets 62. The first unwinding device 10 is used to place the rolled first negative electrode roll 61, and the first unwinding device 10 will release the rolled first negative electrode roll 61 after moving.

The second unwinding device 20 is provided with a first separator roll 63, and there are two second unwinding devices 20 to unwind the first separator roll 63 on the opposite sides of the first negative electrode sheet 62. For example, one second unwinding device 20 is provided on each of the front and rear opposite sides of the first negative electrode sheet 62, and the second unwinding devices 20 on both sides are provided with a first separator roll 63.

The feeding device 80 is provided with a composite electrode unit 65, and there are two feeding devices 80 to move the composite electrode unit 65 inside on the opposite sides of the first negative electrode sheet 62 in the direction perpendicular to the direction of releasing the first negative electrode roll 61, so that the first separator 64 and the first negative electrode sheet 62 are stacked on both sides of the composite electrode unit 65.

According to the laminating device 100 for laminated battery of the embodiment of the present application, by reserving a connection portion 66 between any two adjacent first negative electrode sheets 62, continuous connection between the first separator 64 and the first negative electrode sheet 62 is achieved, reducing the steps of stacking the first negative electrode sheets 62, improving the laminating efficiency, and increasing the output of laminated batteries.

As shown in Figure 3, optionally, the lamination device 100 also includes a first rolling device 50, which is used to roll the first separator 64 on the opposite sides of the first negative electrode sheet 62.

Alternatively, the pressure value output by the first rolling device 50 on the first separator 64 is 1000 to 5000 Newton. For example, the pressure value output by the first rolling device 50 on the first separator 64 is 1000 Newton; alternatively, the pressure value output by the first rolling device 50 on the first separator 64 is 5000 Newton; or alternatively, the pressure value output by the first rolling device 50 on the first separator 64 is 3000 Newton. It should be noted that the pressure value output by the first rolling device 50 on the first separator 64 is determined based on factors such as the flow velocity of the first negative electrode sheet 62 and the viscosity on the first separator 64. In order to achieve the required viscosity between the first separator 64 and the first negative electrode sheet 62, the pressure value formed by the first rolling device 50 can be adjusted.

As shown in Figure 3, optionally, the first rolling device 50 is configured as a hot pressing device. By setting the first rolling device 50 as a hot pressing device, the surrounding environment of the first separator 64 is controlled while rolling the first separator 64, improving the adhesion of the surface of the first separator 64, allowing the first separator 64 to roll with the first negative electrode sheet 62 under sufficient adhesion, and improving the connection stability between the first separator 64 and the first negative electrode sheet 62.

Alternatively, the temperature value formed by the hot pressing device on the first separator 64 is 60 to 110 degrees Celsius. For example, the temperature value formed by the hot pressing device on the first separator 64 is 60 degrees Celsius; alternatively, the temperature value formed by the hot pressing device on the first separator 64 is 110 degrees Celsius; or alternatively, the temperature value formed by the hot pressing device on the first separator 64 is 90 degrees. It should be noted that in order to achieve the required viscosity between the first separator 64 and the first negative electrode sheet 62, the temperature value formed by the hot pressing device can be adjusted.

As shown in Figure 3, the laminating device optionally further includes a second rolling device 51 for rolling the second negative electrode sheet 651, the second separator 652, and the positive electrode sheet 653.

Alternatively, the pressure value output by the second rolling device 51 on the second negative electrode sheet 651, the second separator 652, and the positive electrode sheet 653 is 1000 to 5000 Newton. For example, the pressure value output by the second rolling device 51 on the second negative electrode sheet 651, the second separator 652, and the positive electrode sheet 653 is 1000 Newton; alternatively, the pressure value output by the second rolling device 51 on the second negative electrode sheet 651, the second separator 652, and the positive electrode sheet 653 is 5000 Newton; further alternatively, the pressure value output by the second rolling device 51 on the second negative electrode sheet 651, the second separator 652, and the positive electrode sheet 653 is 3000 Newton. It should be noted that the pressure value output by the second rolling device 51 on the second negative electrode sheet 651, the second separator 652, and the positive electrode sheet 653 is determined based on factors such as the flow velocity of the second negative electrode sheet 651 and the second separator 652, and the viscosity on the second separator 652. In order to achieve the required viscosity between the second negative electrode sheet 651, the second separator 652, and the positive electrode sheet 653, the pressure value formed by the second rolling device 51 can be adjusted.

Alternatively, the second rolling device 51 is configured as a hot pressing device. By setting the second rolling device 51 as a hot pressing device, the environment surrounding the second negative electrode sheet 651, the second separator 652, and the positive electrode sheet 653 is controlled while rolling the second negative electrode sheet 651, the second separator 652, and the positive electrode sheet 653, improving the adhesion of the surface of the second separator 652, allowing the second separator 652 to roll together with the second negative electrode sheet 651 and the positive electrode sheet 653 under sufficient adhesion, and improving the connection stability between the second negative electrode sheet 651, the second separator 652, and the positive electrode sheet 653.

Alternatively, the temperature value formed by the hot pressing device on the second negative electrode sheet 651, the second separator 652, and the positive electrode sheet 653 is 60 to 110 degrees Celsius. For example, the temperature value formed by the hot pressing device on the first separator 64 is 60 degrees Celsius; alternatively, the temperature value formed by the hot pressing device on the first separator 64 is 110 degrees Celsius; alternatively, the temperature value formed by the hot pressing device on the first separator 64 is 90 degrees. It should be noted that in order to achieve the required viscosity between the first separator 64 and the first negative electrode sheet 62, the temperature value formed by the hot pressing device can be adjusted.

As shown in Figure 3, optionally, the laminating device 100 also includes a first heating device 40 for heat-treating the first separator 64 on the opposite sides of the first negative electrode sheet 62. For example, the first heating device 40 is a heating plate, and the front and rear opposite sides of the first negative electrode sheet 62 are provided with heating plates, which heat the first negative electrode sheet 62 and the first separator 64 on the first negative electrode sheet 62.

Alternatively, the temperature value formed by the first heating device 40 on the first separator 64 is 60 to 110 degrees Celsius. For example, the temperature value formed by the first heating device 40 on the first separator 64 is 60 degrees Celsius; alternatively, the temperature value formed by the first heating device 40 on the first separator 64 is 110 degrees Celsius; alternatively, the temperature value formed by the first heating device 40 on the first separator 64 is 90 degrees. It should be noted that the temperature value formed by the first heating device 40 on the first separator 64 is determined based on factors such as the flow velocity of the first negative electrode sheet 62 and the viscosity of the first separator 64 before heat-treatment. In order to achieve the required viscosity between the first separator 64 and the first negative electrode sheet 62, the temperature value formed by the first heating device 40 can be adjusted.

As shown in Figure 3, optionally, the laminating device also includes a second heating device 41 for heat-treatment of the second negative electrode sheet 651, the second separator 652, and the positive electrode sheet 653. For example, the second heating device 41 is a heating plate, and heating plates are provided on both front and rear opposing sides of the second negative electrode sheet 651, the second separator 652, and the positive electrode sheet 653. The heating plates heat the second negative electrode sheet 651, the second separator 652, and the positive electrode sheet 653.

Alternatively, the second heating device 41 can form a temperature value of 60 to 110 degrees Celsius on the second negative electrode sheet 651, the second separator 652, and the positive electrode sheet 653. For example, the second heating device 41 can form a temperature value of 60 degrees Celsius on the second negative electrode sheet 651, the second separator 652, and the positive electrode sheet 653; alternatively, the second heating device 41 can form a temperature value of 110 degrees Celsius on the second negative electrode sheet 651, the second separator 652, and the positive electrode sheet 653; or alternatively, the second heating device 41 can form a temperature value of 90 degrees Celsius on the second negative electrode sheet 651, the second separator 652, and the positive electrode sheet 653. It should be noted that the temperature value formed by the second heating device 41 on the second negative electrode sheet 651, the second separator 652, and the positive electrode sheet 653 is determined based on factors such as the flow velocity of the second negative electrode sheet 651 and the viscosity on the second separator 652 before heat-treatment. In order to achieve the required viscosity between the second negative electrode sheet 651, the second separator 652, and the positive electrode sheet 653, the temperature value formed by the second heating device 41 can be adjusted.

As shown in Figure 3, optionally, the lamination device 100 also includes a first corona device 30 for corona-shock-treatment of the first separator 64 on the opposite sides of the first negative electrode sheet 62.

Alternatively, the voltage of the first corona device 30 is 2000 to 4000 volts. The voltage of the first corona device 30 is in the range of 2000 to 4000 volts, which improves the surface adhesion of the first separator 64 after corona-shock-treatment.

As shown in Figure 3, optionally, the laminating device also includes a second corona device 31 for corona-shock-treatment of the second separator 652 on the opposite sides of the second negative electrode sheet 651.

Alternatively, the voltage of the second corona device 31 is 2000 to 4000 volts. The voltage of the second corona device 31 is in the range of 2000 to 4000 volts, which improves the surface adhesion of the second diaphragm 652 after corona-shock-treatment.

As shown in Figure 3, the feeding device 80 optionally includes a third unwinding device 81, a fourth unwinding device 82, a fifth unwinding device 83, and a cutting device 84.

The third unwinding device 81 is provided with a second negative electrode roll 67, and used to release the second negative electrode roll 67 in a direction perpendicular to the direction in which the first negative electrode roll 61 is released. During the release process of the second negative electrode roll 67, a second negative electrode sheet 651 is die-cut;

The fourth unwinding device 82 is provided with a second separator roll 68, and used to unwind the second separator roll 68 on the opposite sides of the second negative electrode sheet 651;

The fifth unwinding device 83 is provided with a positive electrode roll 69, and used to unwind the positive electrode roll 69 on the second separator 652 on both sides. During the unwinding process of the positive electrode roll 69, a positive electrode sheet 653 is die-cut;

The cutting device 84 is used to cut the stacked second negative electrode sheet 651, second separator 652, and positive electrode sheet 653 to obtain the composite electrode unit 65, and move the composite electrode unit 65 into between two adjacent first negative electrode sheets 62.

As shown in Figure 3, optionally, the laminating device 100 for laminated battery also includes a heating platform 70, which is located below the first unwinding device 10 and used to heat the bottom of the laminated batteries.

Alternatively, the temperature value formed by the heating platform 70 at the bottom of the laminated battery is 50 to 70 degrees. For example, the temperature value formed by the heating platform 70 at the bottom of the laminated battery is 50 degrees Celsius; alternatively, the temperature value formed by the heating platform 70 at the bottom of the laminated battery is 70 degrees Celsius; or alternatively, the temperature value formed by the heating platform 70 at the bottom of the laminated battery is 60 degrees. It should be noted that in order to achieve the required viscosity inside the laminated battery, the temperature value formed by the heating platform 70 can be adjusted.

Other components and operations of the lamination method for laminated batteries according to embodiments of the present application are known to those of ordinary skill in the art and are not described in detail herein.

In the description of this specification, references to terms such as "embodiment", "example", etc. mean that the specific features, structures, materials, or characteristics described in connection with the embodiment or example are included in at least one embodiment or example of the present application. In this specification, schematic representations of the above terms do not necessarily refer to the same embodiment or example. Moreover, the specific features, structures, materials, or characteristics described may be combined in any suitable manner in any one or more embodiments or examples.

Although the embodiments of the present application have been shown and described, those of ordinary skill in the art will appreciate that various changes, modifications, substitutions and variations can be made to these embodiments without departing from the principles and objectives of the present application, and that the scope of the present application is defined by the claims and their equivalents.

## Claims

1. A laminating method for laminated battery, wherein, comprising the following steps:
die-cutting a first negative electrode roll (61) into a plurality of first negative electrode sheets (62), and reserving a connection portion (66) between any two adjacent first negative electrode sheets (62);
unwinding the first negative electrode roll (61) to release the first negative electrode sheet (62);
unwinding the first separator roll (63) on two opposite sides of the first negative electrode sheet (62);
moving the composite electrode unit (65) inside on two opposite sides of the first negative electrode sheets (62) in a direction perpendicular to a direction of releasing the first negative electrode roll, so that the first separator (64) and the first negative electrode sheet (62) are stacked on the two opposite sides of the composite electrode unit (65).

2. The laminating method for laminated battery according to claim 1, wherein, after the step of unwinding the first separator roll (63) on the two opposite sides of the first negative electrode sheet (62), the method further comprises:
rolling the first separator (64) on the two opposite sides of the first negative electrode sheet (62).

3. The laminating method for laminated battery according to claim 2, wherein, prior to the step of rolling the first separator (64) on the two opposite sides of the first negative electrode sheet (62), further comprising:
heat-treating the first separator (64) on the two opposite sides of the first negative electrode sheet (62).

4. The laminating method for laminated battery according to claim 2 or 3, wherein, the rolling process of the first separator (64) on the two opposite sides of the first negative electrode sheet (62) is a hot pressing process.

5. The laminating method for laminated battery according to any one of claims 2 to 4, wherein, prior to the step of rolling the first separator (64) on the two opposite sides of the first negative electrode sheet (62), further comprising:
corona-shock-treating the first separator (64) on the two opposite sides of the first negative electrode sheet (62).

6. The laminating method for laminated battery according to any one of claims 1 to 5, wherein, the composite electrode unit (65) comprises a second negative electrode sheet (651), two second separators (652), and two positive electrode sheets (653); the two second separators (652) being arranged on opposite sides of the second negative electrode roll (67), and the two positive electrode sheets (653) being arranged on the two second separators (652) correspondingly.

7. The laminating method for laminated battery according to claim 6, wherein the step of moving the composite electrode unit (65) inside on the two opposite sides of the first negative electrode sheets (62) in the direction perpendicular to the direction of releasing the first negative electrode roll comprises:
releasing a second negative electrode roll (67) in a direction perpendicular to the direction of releasing the first negative electrode roll (61), and die-cutting out the second negative electrode sheet (651) during the release process of the second negative electrode roll (67);
unwinding the second separator roll (68) on the two opposite sides of the second negative electrode sheet (651);
unwinding the positive electrode roll (69) on the second separator (652) on both sides, and die-cutting out the positive electrode sheet (653) during the unwinding process of the positive electrode roll (69);
cutting the stacked second negative electrode sheet (651), second separator (652), and positive electrode sheet (653) to obtain the composite electrode unit (65), and moving the composite electrode unit (65) into between two adjacent first negative electrode sheets (62).

8. The laminating method for laminated battery according to any one of claims 1 to 7, wherein after the step of moving the composite electrode unit (65) inside on two opposite sides of the first negative electrode sheets (62) in the direction perpendicular to the direction of releasing the first negative electrode roll so that the first separator (64) and the first negative electrode sheet (62) are stacked on the two opposite sides of the composite electrode unit (65), further comprising:
heat-treating the bottom of the laminated battery.

9. A laminating device (100) for laminated battery, comprising:
a first unwinding device (10) provided with a first negative electrode roll (61), the first negative electrode roll (61) being die-cut into a plurality of first negative electrode sheets (62), and a connection portion (66) being reserved between any two adjacent first negative electrode sheets (62), the first unwinding device (10) being configured to unwinding the first negative electrode roll (61) to release the first negative electrode sheets (62);
second unwinding devices (20) provided with first separator rolls (63), and the second unwinding devices (20) being two, to unwind the first separator rolls (63) on two opposite sides of the first negative electrode sheet (62);
feeding devices, the feeding devices being provided with composite electrode units (65), the feeding devices being two, to move the composite electrode units (65) inside on two opposite sides of the first negative electrode sheets (62) in the direction perpendicular to the direction of releasing the first negative electrode roll, so that two opposite sides of the composite electrode unit (65) are stacked with a first separator (64) and the first negative electrode sheet (62).

10. The laminating device (100) for laminated battery according to claim 9, further comprising:
a first rolling device (50) for rolling the first separator (64) on the two opposite sides of the first negative electrode sheet (62).

11. The laminating device (100) for laminated battery according to claim 10, wherein, the first rolling device (50) is configured as a hot pressing device.

12. The laminating device (100) for laminated battery according to any one of claims 9 to 11, further comprising:
a first heating device (40) for heat-treating the first separator (64) on the two opposite sides of the first negative electrode sheet (62).

13. The laminating device (100) for laminated battery according to any one of claims 9 to 12, further comprising:
a first corona device (30) for performing corona impact treatment on the first separator (64) on the two opposite sides of the first negative electrode sheet (62).

14. The laminating device (100) for laminated battery according to any one of claims 9 to 13, wherein the feeding device comprises:
a third unwinding device (81) on which a second negative electrode roll (67) is provided, the third unwinding device (81) is used to release the second negative electrode roll (67) in a direction perpendicular to the direction of releasing the first negative electrode roll (61), and the second negative electrode roll (67) is die-cut to form the second negative electrode sheet (651) during the release process;
a fourth unwinding device (82) on which a second separator roll (68) is provided, the fourth unwinding device (82) is used to unwind the second separator roll (68) on the two opposite sides of the second negative electrode sheet (651);
a fifth unwinding device (83) on which a positive electrode roll (69) is provided, the fifth unwinding device (83) is used to unwind the positive electrode roll (69) on the second separators (652) on both sides, and the positive electrode roll (69) is die-cut out during the unwinding process to form the positive electrode sheet (653);
a cutting device (84) for cutting the stacked second negative electrode sheet (651), second separators (652), and positive electrode sheet (653) to obtain the composite electrode unit (65), and moving the composite electrode unit (65) into between two adjacent first negative electrode sheets (62).

15. The laminating device (100) for laminated battery according to any one of claims 9 to 14, further comprising a heating platform (70) disposed below the first unwinding device (10) for heating the bottom of the laminated batteries.
